# EUROPÄISCHE PATENTSCHRIFT

(11) **EP 1 216 869 B1**
(45) Veröffentlichungstag und Bekanntmachung des Hinweises auf die Patenterteilung: **10.12.2008**
(21) Anmeldenummer: 01129268.7
(22) Anmeldetag: 12.12.2001
(51) Int. Cl.: B60J 7/053, B60J 7/057

(54) **Öffnungsfähiges Fahrzeugdach**
Open roof for vehicle
Toit ouvrant pour véhicule

(30) Priorität: 23.12.2000 DE 10065947
(43) Veröffentlichungstag der Anmeldung: 26.06.2002
(73) Patentinhaber: Webasto Vehicle Systems International GmbH, 82131 Stockdorf (DE)
(72) Erfinder: Schleicher, Bernd, 80689 München (DE); Hanke, Michael, 82049 Pullach (DE); Laux, Philipp, 81929 München (DE); Pollak, Martin, 82110 Germering (DE)
(74) Vertreter: Wiese, Gerhard

(56) Entgegenhaltungen:
- DE-A- 3 930 756
- DE-A- 4 005 789
- DE-A- 19 934 847
- DE-U- 9 407 234
- US-A- 4 684 169
- US-A- 4 919 475
- US-A- 4 923 246
- US-A- 5 941 598

## Beschreibung

Die Erfindung betrifft ein öffnungsfähiges Fahrzeugdach gemäß dem Oberbegriff des Patentanspruchs 1.

Ein derartiges gattungsgemäßes Fahrzeugdach ist aus der DE 44 05 583 A1 bekannt. Dieses Fahrzeugdach ist als Hebeschiebedach ausgebildet, das mit seiner Hinterkante über das feste Fahrzeugdach ausstellbar und nach hinten verschiebbar ist. Zur Betätigung eines Riegelelements ist ein zusätzlich am Schlitten für die Ausstell- und Verschiebebewegung angelenkter Hebel vorgesehen, der an seiner Unterseite einer Rastnase zum Eingriff in eine Aussparung einer Führungschiene aufweist und mittels eines Kulissenschlitzes bei einer Verschiebung des Schlittens durch einen an diesem angeordneten Kulissenstift angehoben wird. Die gezeigte Mechanik ist zur Betätigung eines Schiebe-Hebedachs, bei dem der Deckel mit seiner Hinterkante abgesenkt und unter das feste Fahrzeugdach nach hinten verschoben wird, nicht geeignet. Ferner bedeutet eine zusätzliche Kulisse zur Betätigung des Riegelelements auch einen zusätzlichen Aufwand.

Bei einem aus der DE 34 44 522 A1 bekannten Fahrzeugdach ist ein federnd in Eingriffsstellung mit der Führungsschiene vorbelasteter Rasthaken am vorderen Gleitschuh einer Schiebe-Hebedachmechanik vorgesehen, der beim Absenken des Deckels vor dem Verschieben unter das feste Fahrzeugdach vom Deckel oder einem mit diesem verbundenen Teil außer Eingriff gebracht wird. Bei einem derartigen Rasthaken ist eine aufwendige Justierung gegenüber dem Deckel oder dem mit diesem verbundenen Teil erforderlich, um eine einwandfreie Funktion zu gewährleisten.

Der Erfindung liegt die Aufgabe zugrunde, ein öffnungsfähiges Fahrzeugdach zu schaffen, bei dem eine einfache, zuverlässige und verschleißarme Ver- und Entriegelung der Verschiebemechanik ermöglicht wird.

Diese Aufgabe wird durch die Merkmale des Patentanspruchs 1 gelöst. Vorteilhafte Ausgestaltungen der Erfindung sind den Unteransprüchen zu entnehmen.

Durch die Anordnung des Riegelelements an einem Riegelhebel, der schwenkbar mit dem Deckel bzw. einem mit diesem verbundenen Bauteil, wie einem Deckelträger, verbunden ist, wird eine zuverlässige zwangsweise Steuerung des Riegelelements erreicht. Es ist keine zusätzliche Kulissen/Kulissenstift-Anordnung zur Betätigung des Riegelhebels nötig wie beim eingangs genannten Stand der Technik gemäß DE 44 05 583 A1. Durch die unmittelbare Anlenkung des Riegelhebels am Deckel bzw. einem mit diesem verbundenen Bauteil (Deckelträger) werden außerdem die zu beachtenden Toleranzen reduziert.

Dabei ist der Riegelhebel in an sich bekannter Weise vorteilhaft in Richtung auf eine Eingriffsstellung des Riegelelements vorgespannt, wodurch insbesondere bei Fahrten auf unebenem Untergrund zum einen eine sichere Eingriff des Riegelelements gewährleistet ist und zum anderen Klappergeräusche vermieden werden.

Die Mitnehmereinrichtung wird bevorzugt von einem nach vorne geöffneten, nach unten gebogenen Kulissenschlitz gebildet.

Die Ausstell- und Verschiebemechanik weist bevorzugt in an sich bekannter Weise einen an einem Antriebsschlitten gelagerten Kulissenstift auf.

Besonders bevorzugt ist eine Anordnung, bei der der Kulissenstift im Zusammenwirken mit einer mit dem Deckel verbundenen Kulissenbahn sowohl die Bewegungen des Deckels als auch die Bewegungen des Riegelhebels steuert.

Gemäß einer alternativen Ausführungsform ist vorgesehen, daß an der Ausstell- und Verschiebemechanik, bevorzugt an deren Antriebsschlitten, ein zusätzlicher Steuerzapfen zur Betätigung des Riegelhebels angeordnet ist. Mittels eines solchen zusätzlichen, unterhalb des eigentlichen Kulissenstifts angeordneten Steuerzapfens läßt sich die Bauhöhe der Mechanik reduzieren.

In an sich bekannter Weise weist die Führungsschiene bevorzugt eine Aussparung auf, in die das Riegelelement von oben her eingreift. An diese Aussparung schließt sich bevorzugt nach hinten eine ansteigende Rampe zur Führung des Riegelelements an. Diese Rampe erleichtert das eindeutige Eingreifen des Riegelelements beim Zurückschieben des Deckels in die Schließposition.

Bevorzugt erstreckt sich der Riegelhebel in Verschieberichtung des Deckels gesehen über den gesamten für die Erzeugung der Schwenkbewegung des Deckels benötigten Weg der Ausstell- und Verschiebemechanik. Das heißt, daß nahezu die gesamte Länge der für die Schwenkbewegungen des Deckels zuständigen Kulissenbahn vom Riegelhebel abgedeckt wird.

Um eine besonders günstige Krafteinleitung für die Ent- und Verriegelung zu schaffen, ist bevorzugt vorgesehen, daß sich das Riegelelement in Schließposition des Deckels in etwa vertikal unter der Eingriffsstelle der Ausstell- und Verschiebemechanik, d.h. in etwa unterhalb des Kulissenstifts befindet.

Nachfolgend sind Ausführungsbeispiele der der Erfindung anhand der Zeichnung beschrieben. Es zeigt:
- Fig. 1:: eine schematische Seitenansicht der Ausstell- und Verschiebemechanik in Schließposition des Deckels,
- Fig. 2:: eine Ansicht gemäß Fig. 1 mit ausgestelltem Deckel,
- Fig. 3:: eine Darstellung ähnlich Fig. 1, in der zusätzlich ein Federelement zur Beaufschlagung des Riegelhebels dargestellt ist,
- Fig. 4:: eine Darstellung gemäß Fig. 1 bei mir seiner Hinterkante abgesenktem Deckel,
- Fig. 5:: eine Darstellung gemäß Fig. 1 bei nach hinten verschobenen Deckel,
- Fign. 6 ― 8:: in einem Querschnitt gemäß der Linie A-A in Fig. 1 verschiedene Varianten der Anordnung des Riegelhebels und des Riegelelements, und
- Fig. 9:: eine schematische perspektivische Draufsicht auf ein Fahrzeugdach.

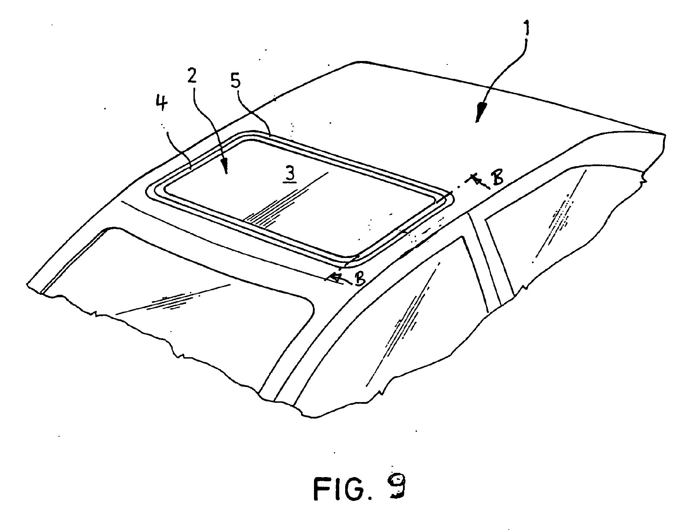

Das in Fig. 9 dargestellte Fahrzeugdach 1 weist einen Deckel 2 auf, mittels dem eine Dachöffnung 3 wahlweise verschlossen oder zumindestens teilweise freigelegt werden kann. Der Deckel 2 ist bevorzugt in Form einer transparenten Scheibe ausgebildet, die von einem Deckelrahmen 4, bevorzugt aus Kunststoff, und einer am Deckelrahmen 4 befestigten umlaufenden Deckeldichtung 5 umgeben ist.

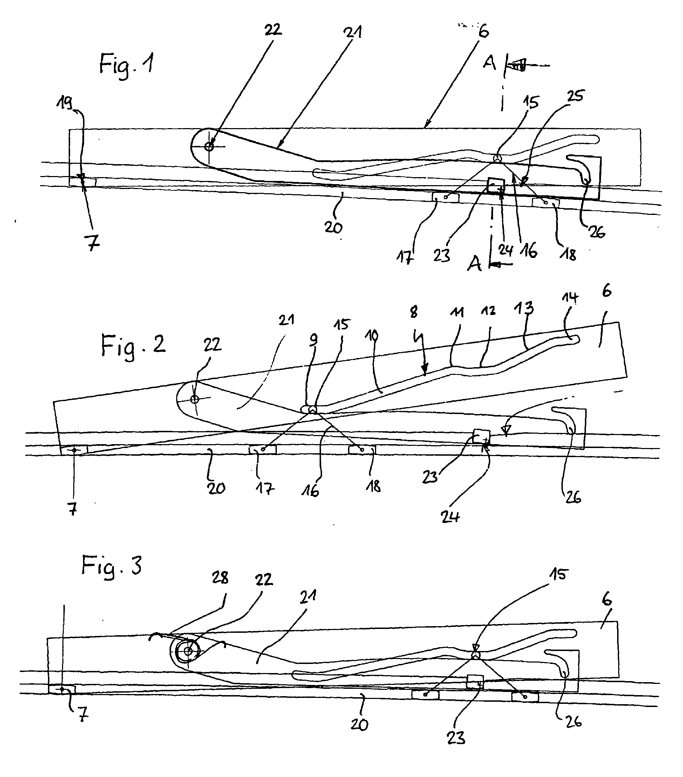

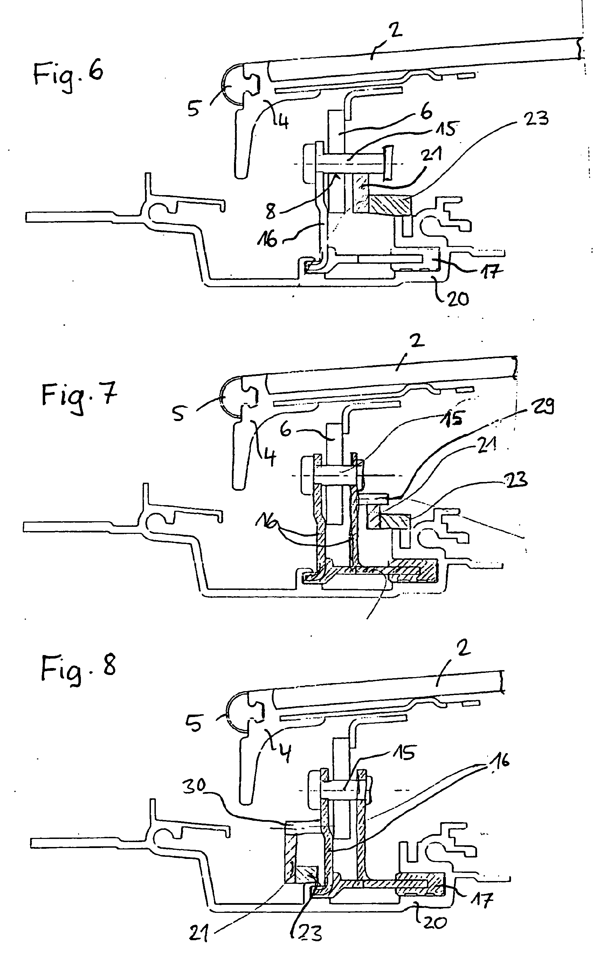

Zu beiden Seiten des Deckels 2 ist an dessen Unterseite ein Deckelträger 6 angeordnet, wie dies aus den Figuren 6 bis 8 hervorgeht. Die Darstellungen in den Figuren 1 ― 5 sind in sofern Seitenansichten eines Längsschnitts gemäß den Pfeilen B in der Fig. 9.

Der Deckelträger 6 ist mittels eines vorderen Gleitelements 7 schwenkbar in einer Führungsschiene 20 gelagert. Dabei kann die Lagerung am Gleitelement entweder mittels einer Schwenkachse 19 erfolgen oder das Gleitelement 7 ist an der Ober- und Unterseite ballig ausgebildet, so daß es die Schwenkbewegungen des Deckelträgers 6 mitmachen kann. In diesem Falle ist die Schwenkachse 19 Bestandteil des Gleitelements 7. Der Deckelträger 6 weist im hinteren Bereich eine Kulissenbahn 8 auf, die sich aus verschiedenen Kulissenbahn-Abschnitten 9, 10, 11, 12, 13 und 14 zusammensetzt. An einen ersten Abschnitt 9, der gegenüber den anderen Abschnitten am tiefsten liegt und sich nahezu horizontal erstreckt, schließt sich ein zweiter Abschnitt 10 an, der nach hinten linear ansteigt. Darauf folgt ein sattelförmiger dritter Abschnitt 11, der eine Durchtauchbewegung der Deckelhinterkante bei einer Schwenkbewegung steuert. An diesen schließt sich nach hinten ein vierter Abschnitt 12 an, der im wesentlichen horizontal ausgebildet ist und die Null-Lage des Deckels 2 definiert, bei der dieser bündig zur umgebenden festen Dachhaut angeordnet ist. Auf diesen folgt ein nach hinten anschließenden linear ansteigender fünfter Abschnitt 13 sowie ein am höchsten liegender, im wesentlichen horizontaler Abschnitt 14.

In der Kulissenbahn 8 mit ihren Abschnitten 9 bis 14 ist ein Kulissenstift 15 bewegbar, der an einem Antriebsschlitten 16 angeordnet ist. Der Antriebsschlitten 16, der in den Figuren 1 ― 5 nur schematisch in Form eines Dreiecks dargestellt ist, ist an seinem vorderen Ende zu beiden Seiten in der Führungsschiene 20 über ein Gleitelement 17 und an seinem hinteren Ende in gleicher Weise durch ein Gleitelement 18 abgestützt.

Im vorderen Bereich des Deckelträgers 6, und zwar bevorzugt etwa nach einem Fünftel bis zu einem Viertel seiner Länge ist ein Riegelhebel 21 mit einer Schwenkachse 22 schwenkbar befestigt. Der von seiner Schwenkachse 22 schräg nach hinten und unten verlaufende Riegelhebel 21 weist nach etwa einem Viertel bis einem Drittel seiner Länge eine Kröpfung in Richtung zur Horizontalen auf und erstreckt sich mit seinem an die Kröpfung anschließenden hinteren, in Schließposition des Deckels gemäß Fig. 1 zur Führungsschiene 20 in etwa parallelen Teil über beinahe die gesamte Länge der Kulissenbahn 8. Am hinteren oberen Ende weist der Riegelhebel 21 einen nach vorne offenen und anschließend nach unten abgebogenen Kulissenschlitz 26 auf.

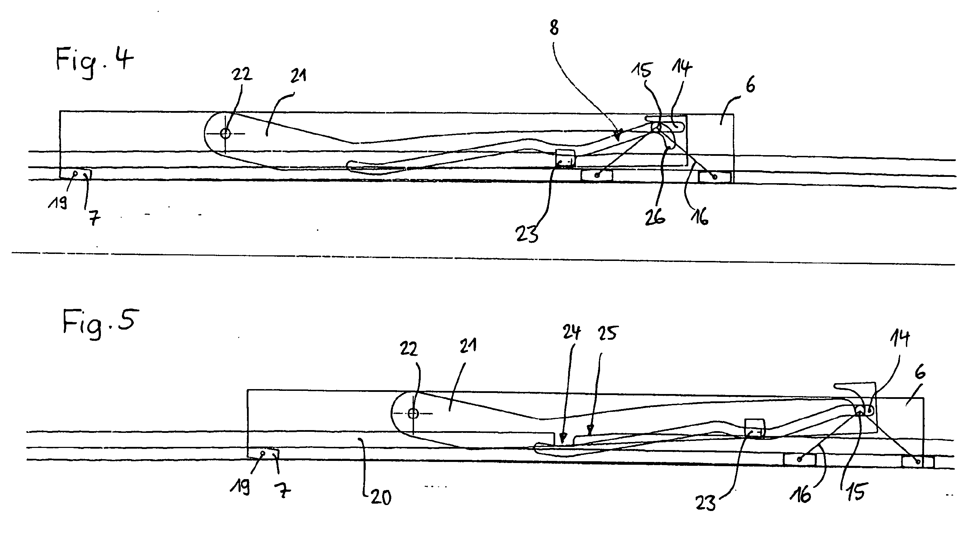

Der Riegelhebel 21 wird mittels eines in Fig. 3 dargestellten Federelements 28 bevorzugt gegenüber dem Deckelträger 6 federnd nach unten belastet, so daß ein im hinteren Drittel des Riegelhebels seitlich unten an diesem angeordnetes Riegelelement 23 in eine Aussparung 24 an der Führungsschiene 20 gedrückt wird. An die Aussparung 24 in der Führungsschiene 20 schließt sich nach hinten eine Rampe 25 an, die nach hinten ansteigt, und auf der das Riegelelement 23 nach dem Austreten aus der Aussparung 24, das heißt in seiner Bewegungsphase zwischen den Figuren 4 und 5 entlang gleitet. Bei einer umgekehrten Bewegung, das heißt aus der in Fig. 5 gezeigten Position in die in Fig. 4 gezeigte Position stößt das Riegelelement 23 aufgrund der nach vorne abgesenkten Rampe 25 mit seiner Vorderkante an die vordere Kante der Aussparung 24 an und wird dadurch eindeutig in die Aussparung 24 hineingedrückt.

Antriebsschlitten 16 und Deckelträger 6 mit der Kulissenbahn 8 können unterschiedliche Ausgestaltungen annehmen, wie dies in den Figuren 6 bis 8 verdeutlicht ist. So greift in der Ausführungsform gemäß Fig. 6 der Antriebsschlitten 16 nur von der Außenseite her mit dem Kulissenstift 15 in die Kulissenbahn 8 am Deckelträger 6 ein, während der Riegelhebel 21 mit dem Riegelelement 23 an der Innenseite des Deckelträgers 6 angeordnet ist. Der Kulissenstift 15 ist nach innen verlängert ausgebildet und sein freies Ende wird von einem im Durchmesser erweiterten Bund begrenzt. Das nach innen verlängerte Ende des Kulissenstifts 15 dient zur Betätigung des Riegelhebels 21. Zu diesem Zweck liegt es während der Schwenkbewegungen des Deckels 2 an dessen Oberseite an und gerät am Ende der der Verschiebung des Deckels 2 vorausgehenden Schwenkbewegung in Eingriff mit dem Kulissenschlitz 26.

Hiervon unterscheidet sich die Ausführungsform gemäß Fig. 7 dadurch, daß der Antriebsschlitten 16 zwei Wangen aufweist, die sich zu beiden Seiten des Deckelträgers 6 erstrecken und somit eine stabilere verkantungsfreie Abstützung des Kulissenstifts 15 gewährleisten. Ferner ist im Unterschied zu Fig. 6, bei der der Kulissenstift 15 nach innen verlängert ist, der Kulissenstift 15 in Fig. 7 verkürzt ausgebildet, so daß er nur die Verbindung zwischen den beiden Wangen des Antriebsschlittens 16 und der Kulissenbahn 8 des Deckelträgers 6 herstellt. Für den Eingriff mit dem Kulissenschlitz 26 des Riegelhebels 21 ist bei der Variante gemäß Fig. 7 ein zusätzlicher Steuerzapfen 29 am Antriebsschlitten 16 vorgesehen. Dieser Steuerzapfen 29 ist tiefer angeordnet als der Kulissenstift 15, so daß der Riegelhebel 21 bezogen auf die Höhe des Fahrzeugdachs niedriger ausgebildet werden kann, als dies in den Figuren 1 ― 5 dargestellt ist.

Schließlich ist in Fig. 8 eine weitere Variante gezeigt, bei der im Unterschied zu Fig. 7 ein Steuerzapfen 30 auf der Außenseite des ebenfalls aus zwei Wangen bestehenden Antriebsschlittens 16 angeordnet ist, der den in diesem Fall ebenfalls außen angeordneten Riegelhebel 21 durch Anliegen an dessen Oberkante und Eingriff in den Kulissenschlitz 26 bezüglich seiner Schwenkbewegung steuert.

Nachfolgend ist kurz der Funktionsablauf des erfindungsgemäßen Fahrzeugdaches ausgehend von der Schließposition in Fig. 1 beschrieben, bei der sich der Kulissenstift 15 im vierten Abschnitt 12 der Kulissenbahn 8 befindet. Der Kulissenstift 15 liegt ferner mit seiner Oberseite auf der Oberseite des Riegelhebels 21 an, welcher zusätzlich durch die Feder 28 nach unten gedrückt und dadurch in Eingriff mit der Aussparung 24 an der Führungsschiene 20 gehalten wird.

Für ein Ausstellen des Deckels 2 wird der Antriebsschlitten 16 aus der in Fig. 1 gezeigten Position in die in die Fig. 2 gezeigte Position nach vorne, das heißt in der Zeichnung nach links bewegt. Dabei durchläuft der Kulissenstift 15 nacheinander die Abschnitte 11, 10 und 9 der Kulissenbahn 8. Der Kulissenstift 15 gleitet bevorzugt während der gesamten Bewegung auf der Oberkante des Riegelhebels 21 entlang, wobei dieser zusätzlich durch das Federelement 28 nach unten gedrückt wird, so daß das Riegelelement 23 auch bei der Ausstellbewegung in Eingriff mit der Aussparung 24 bleibt. Aus der Ausstellposition gemäß Fig. 2 wird der Deckel 2 wieder in die Schließposition gemäß Fig. 3 bewegt, in dem der Antriebsschlitten 16 um den selben Betrag nach hinten gefahren wird.

Um den Deckel 2 mit seiner Hinterkante abzusenken und unter das feste Fahrzeugdach 1 nach hinten zu verschieben, wird der Antriebsschlitten 16 aus der in Fig. 1 und 3 gezeigten Position nach hinten verfahren. Dabei durchläuft der Kulissenstift 15 nacheinander den fünften Abschnitt 13 und den sechsten Abschnitt 14 der Kulissenbahn 8. Beim Übergang vom fünften Abschnitt 13 in den horizontalen sechsten Abschnitt 14 tritt der Kulissenstift 15 ― wie in Fig. 4 gezeigt ― in den Kulissenschlitz 26 des Riegelhebels 21 ein. Beim anschließenden Weiterfahren des Antriebsschlittens 16 nach hinten wird der Riegelhebel 21 durch Anlaufen des Kulissenstifts 15 an die obere gebogene Flanke des Kulissenstifts 26 angehoben, so daß das Riegelelement 23 aus der Aussparung 24 nach oben herausgehoben wird.

Beim anschließenden Verschieben nach hinten unter das feste Fahrzeugdach 1 gleitet das Riegelelement 23 auf der Führungsschiene 20 nach hinten. Dabei ist der Kulissenstift 15 sowohl im Eingriff mit dem sechsten Abschnitt 14 der Kulissenbahn 8 als auch mit dem Kulissenschlitz 26 am Riegelhebel 21. Bei der Variante gemäß Fig. 7 oder 8 ist alternativ zum Kulissenstift 15 der Steuerzapfen 29 bzw. 30 mit dem Kulissenschlitz 26 in Eingriff.

Wird der Deckel 2 aus der nach hinten geschobenen Öffnungsposition gemäß Fig. 5 wieder nach vorne bewegt, so läuft das Riegelelement 23 vor Erreichen der Aussparung 24 auf der nach vorne geneigten Rampe 25 an der Führungsschiene 20 etwas nach unten und stößt somit mit seiner Vorderkante an die vordere Kante der Aussparung 24, so daß ein Überfahren dieser Aussparung 24 unmöglich ist. Das Riegelelement 23 wird somit sicher in die Aussparung 24 abgesenkt.

Mittels der beschriebenen Ausstell- und Verschiebemechanik, die gleichzeitig zwangsweise das Riegelelement 23 ansteuert, wird ein zuverlässiger Mechanismus geschaffen, der keinerlei Einstellungs- oder Wartungsarbeiten erfordert und über einen langen Zeitraum nahezu verschleißfrei arbeitet. Auch wenn das Ausführungsbeispiel sich auf eine Mechanik für ein Schiebe-Hebedach beschränkt, ist ein von einem Antriebsschlitten der Ausstell- und Verschiebemechanik betätigbarer Verriegelungshebel in abgewandelter Form auch für ein Spoilerdach oder ein außen geführtes Schiebedach verwendbar.

### Bezugszeichenliste

- 1: Fahrzeugdach
- 2: Deckel
- 3: Dachöffnung
- 4: Deckelrahmen
- 5: Deckeldichtung
- 6: Deckelträger
- 7: (vorderes) Gleitelement
- 8: Kulissenbahn
- 9: erster Abschnitt (von 8)
- 10: zweiter Abschnitt (von 8)
- 11: dritter Abschnitt (von 8)
- 12: vierter Abschnitt (von 8)
- 13: fünfter Abschnitt (von 8)
- 14: sechster Abschnitt (von 8)
- 15: Kulissenstift
- 16: Antriebsschlitten
- 17: Gleitelement (an 16)
- 18: Gleitelement (an 16)
- 19: Schwenkachse (von 6 an 7)
- 20: Führungsschiene
- 21: Riegelhebel
- 22: Schwenkachse (von 21 an 6)
- 23: Riegelelement
- 24: Aussparung (in 20)
- 25: Rampe
- 26: Kulissenschlitz (an 21)
- 28: Federelement
- 29: Steuerzapfen
- 30: Steuerzapfen

## Patentansprüche

1. Öffnungsfähiges Fahrzeugdach (1) mit wenigstens einem Deckel (2), der mittels einer Ausstell- und Verschiebemechanik 8, 15, 16) eine Dachöffnung (3) wahlweise verschließt oder durch Ausstellen seiner Hinterkante oder durch eine Verschiebung längs einer Führungsschiene (20) zumindestens teilweise freigibt, mit einem den Deckel (2) oder ein mit diesem verbundenes Element in der Schließposition oder der Ausstellposition mit der Führungsschiene (20) verriegelnden Riegelelement (23), das an einem Riegelhebel (21) angeordnet ist, der schwenkbar an einem mit dem Deckel (2) verbundenen Bauteil angeordnet ist, **dadurch gekennzeichnet, daß** das öffnungsfähige Fahrzeugdach als Schiebe-Hebedach ausgebildet ist, bei dem der Deckel (2) vor dem Verschieben mit seiner Hinterkante abgesenkt wird, und daß das Riegelelement (23) mittels einer am Riegelhebel (21) angeordneten Mitnehmereinrichtung (26) durch ein an einem Antriebsschlitten der Ausstell- und Verschiebemechanik angeordnetes Element (15, 29 bzw. 30) zum Ende einer, der Verschiebebewegung vorausgehenden, Absenkbewegung des Deckels (2) außer Eingriff mit der Führungsschiene gebracht wird.

2. Öffnungsfähiges Fahrzeugdach nach Anspruch 1, **dadurch gekennzeichnet, daß** der Riegelhebel (21) mittels eines Federelements (28) in Richtung auf eine Eingriffsstellung des Riegelelements (23) vorgespannt ist.

3. Öffnungsfähiges Fahrzeugdach nach Anspruch 1 oder 2, **dadurch gekennzeichnet, daß** die Mitnehmereinrichtung als ein nach vorne geöffneter, nach unten gebogener Kulissenschlitz (26) ausgebildet ist.

4. Öffnungsfähiges Fahrzeugdach nach einem der Ansprüche 1 bis 3, **dadurch gekennzeichnet, daß** das das Riegelelement (23) außer Eingriff bringende Element von einem am Antriebsschlitten (16) gelagerten Kulissenstift (15) gebildet wird, der im Zusammenwirken mit einer mit dem Deckel (2) verbundenen Kulissenbahn (8) sowohl die Bewegungen des Deckels (2) als auch die Bewegungen des Riegelhebels (21) steuert.

5. Öffnungsfähiges Fahrzeugdach nach einem der Ansprüche 1 bis 3, **dadurch gekennzeichnet, daß** am Antriebsschlitten (16) der Ausstell- und Verschiebemechanik ein zusätzlicher Steuerzapfen (29, 30) zur Betätigung des Riegelhebels (21) angeordnet ist.

6. Öffnungsfähiges Fahrzeugdach nach einem der Ansprüche 1 bis 5, **dadurch gekennzeichnet, daß** der Antriebsschlitten (16) der Ausstell- und Verschiebemechanik sich zu beiden Seiten des mit dem Deckel (2) verbundenen Bauteils (6) erstreckt.

7. Öffnungsfähiges Fahrzeugdach nach einem der Ansprüche 1 bis 6, **dadurch gekennzeichnet, daß** die Führungsschiene (20) eine Aussparung (24) aufweist, in die das Riegelelement (23) von oben eingreift.

8. Öffnungsfähiges Fahrzeugdach nach Anspruch 7, **dadurch gekennzeichnet, daß** die Führungsschiene (20) eine sich an die Aussparung (24) anschließende, nach hinten ansteigende Rampe (25) zur Führung des Riegelelements (23) aufweist.

9. Öffnungsfähiges Fahrzeugdach nach einem der Ansprüche 1 bis 8, **dadurch gekennzeichnet, daß** sich der Riegelhebel (21) in Verschieberichtung des Deckels (2) über den gesamten für die Erzeugung der Schwenkbewegungen des Deckels (2) benötigten Weg der Ausstell- und Verschiebemechanik erstreckt.

10. Öffnungsfähiges Fahrzeugdach nach einem der Ansprüche 1 bis 9, **dadurch gekennzeichnet, daß** sich das Riegelelement (23) in Schließposition des Deckels (2) in etwa vertikal unter der Eingriffsstelle der Ausstell- und Verschiebemechanik (15) befindet.

## Claims

1. Openable vehicle roof (1) having at least one panel (2) which, by means of a raising and displacing mechanism (8, 15, 16), optionally closes a roof opening (3) or, by means of raising its rear edge or by means of a displacement along a guide rail (20), at least partly exposes the said roof opening, having a locking element (23) which locks the panel (2) or an element connected to the latter to the guide rail (20) in the closed position or the raised position and which is arranged on a locking lever (21), which is arranged such that it can pivot on a component connected to the panel (2), **characterized in that** the openable vehicle roof is constructed as a tilt and slide roof, in which the panel (2) is lowered at its rear edge before being displaced, and **in that**, by means of a driver device (26) arranged on the locking lever (21), the locking element (23) is brought out of engagement with the guide rail at the end of a lowering movement of the panel (2) preceding the displacement movement, by an element (15, 29 and 30) arranged on a drive carriage of the raising and displacing mechanism.

2. Openable vehicle roof according to Claim 1, **characterized in that** the locking lever (21) is prestressed in the direction of an engaged position of the locking element (23) by means of a spring element (28).

3. Openable vehicle roof according to Claim 1 or 2, **characterized in that** the driver device is formed as a guide slot (26) which is open towards the front and curved downwards.

4. Openable vehicle roof according to one of Claims 1 to 3, **characterized in that** the element bringing the locking element (23) out of engagement is formed by a guide pin (15) which is mounted on the drive carriage (16) and which, in interaction with a guide track (8) connected to the panel (2), controls both the movements of the panel (2) and the movements of the locking lever (21).

5. Openable vehicle roof according to one of Claims 1 to 3, **characterized in that** on the drive carriage (16) of the raising and displacing mechanism there is arranged an additional control pin (29, 30) for actuating the locking lever (21).

6. Openable vehicle roof according to one of Claims 1 to 5, **characterized in that** the drive carriage (16) of the raising and displacing mechanism extends on both sides of the component (6) connected to the panel (2).

7. Openable vehicle roof according to one of Claims 1 to 6, **characterized in that** the guide rail (20) has a cut-out (24), in which the locking element (23) engages from above.

8. Openable vehicle roof according to Claim 7, **characterized in that** the guide rail (20) has a ramp (25) which adjoins the cut-out (24) and rises towards the rear in order to guide the locking element (23).

9. Openable vehicle roof according to one of Claims 1 to 8, **characterized in that,** in the displacement direction of the panel (2), the locking lever (21) extends over the entire travel of the raising and displacing mechanism that is needed to produce the pivoting movements of the panel (2).

10. Openable vehicle roof according to one of Claims 1 to 9, **characterized in that,** in the closed position of the panel (2), the locking element (23) is located approximately vertically under the point of engagement of the raising and displacing mechanism (15).

## Revendications

1. Toit ouvrant (1) pour véhicule, comprenant au moins un capot (2) qui, sous l'action d'un mécanisme (8, 15, 16) de déploiement et de coulissement, provoque sélectivement l'obturation d'une ouverture (3) dudit toit ou un dégagement au moins partiel de ladite ouverture, par déploiement de son bord postérieur ou suite à un coulissement le long d'une glissière de guidage (20) ; et un élément de verrouillage (23) qui verrouille ladite glissière de guidage avec ledit capot (2) ou avec un élément relié à ce dernier, dans la position de fermeture ou dans la position de déploiement, et est disposé sur un levier de verrouillage (21) agencé à pivotement sur une pièce structurelle reliée audit capot (2), **caractérisé par le fait que** ledit toit ouvrant pour véhicule est réalisé sous la forme d'un toit relevable et coulissant dans lequel le capot (2) est abaissé par son bord postérieur, préalablement au coulissement ; et **par le fait que** la prise, entre l'élément de verrouillage (23) et la glissière de guidage, est supprimée au moyen d'un système d'entraînement (26) situé sur le levier de verrouillage (21), à la fin d'un mouvement d'abaissement du capot (2) précédant le mouvement coulissant, sous l'action d'un élément (15, 29, respectivement 30) situé sur un chariot d'entraînement du mécanisme de déploiement et de coulissement.

2. Toit ouvrant pour véhicule, selon la revendication 1, **caractérisé par le fait que** le levier de verrouillage (21) est précontraint, au moyen d'un élément de ressort (28), en direction d'une position de venue en prise de l'élément de verrouillage (23).

3. Toit ouvrant pour véhicule, selon la revendication 1 ou 2, **caractérisé par le fait que** le système d'entraînement est réalisé sous la forme d'une fente de coulissement (26) ouverte vers l'avant et cintrée vers au-dessous.

4. Toit ouvrant pour véhicule, selon l'une des revendications 1 à 3, **caractérisé par le fait que** l'élément, provoquant la suppression de la prise de l'élément de verrouillage (23), est constitué d'un téton coulissant (15) qui est monté sur le chariot d'entraînement (16) et qui, en coopérant avec une piste de coulissement (8) reliée au capot (2), commande aussi bien les mouvements dudit capot (2), que les mouvements du levier de verrouillage (21).

5. Toit ouvrant pour véhicule, selon l'une des revendications 1 à 3, **caractérisé par le fait qu'**un tenon additionnel de commande (29, 30) est disposé, sur le chariot d'entraînement (16) du mécanisme de déploiement et de coulissement, en vue de l'actionnement du levier de verrouillage (21).

6. Toit ouvrant pour véhicule, selon l'une des revendications 1 à 5, **caractérisé par le fait que** le chariot d'entraînement (16) du mécanisme de déploiement et de coulissement s'étend de part et d'autre de la pièce structurelle (6) reliée au capot (2).

7. Toit ouvrant pour véhicule, selon l'une des revendications 1 à 6, **caractérisé par le fait que** la glissière de guidage (20) comporte un évidement (24) dans lequel l'élément de verrouillage (23) pénètre depuis le haut.

8. Toit ouvrant pour véhicule, selon la revendication 7, **caractérisé par le fait que** la glissière de guidage (20) présente, en vue du guidage de l'élément de verrouillage (23), une rampe (25) ascendant vers l'arrière et située dans la continuité directe de l'évidement (24).

9. Toit ouvrant pour véhicule, selon l'une des revendications 1 à 8, **caractérisé par le fait que** le levier de verrouillage (21) s'étend, dans la direction du coulissement du capot (2), sur toute la course du mécanisme de déploiement et de coulissement qui est requise pour la génération des mouvements pivotants dudit capot (2).

10. Toit ouvrant pour véhicule, selon l'une des revendication 1 à 9, **caractérisé par le fait que**, dans la position de fermeture du capot (2), l'élément de verrouillage (23) se trouve à peu près verticalement au-dessous de la zone de venue en prise du mécanisme (15) de déploiement et de coulissement.
